# EUROPEAN PATENT SPECIFICATION

(11) **EP 2 891 598 B1**
(45) Date of publication and mention of the grant of the patent: **14.08.2019**
(21) Application number: 14200711.1
(22) Date of filing: 31.12.2014
(51) Int. Cl.: B62K 19/36, B62J 1/08, B62J 1/06

(54) **Cable-control seat stem adjustment device**
Sattelrohreinstellvorrichtung mittels einem Seilzug
Dispositif de réglage de tige d'assise par commande de câble

(30) Priority: 03.01.2014 TW 103100122
(43) Date of publication of application: 08.07.2015
(73) Proprietor: Kind Shock Hi-Tech Co., Ltd., Tainan City 709 (TW)
(72) Inventor: Hsu, Jung Yu, Tainan City 709 (TW)
(74) Representative: Cabinet Chaillot

(56) References cited:
- WO-A1-2004/023937
- TW-U- M 468 467
- US-A1- 2012 228 906

## Description

### BACKGROUND OF THE INVENTION

### 1. Fields of the invention

The present invention relates to a seat stem adjustment device, and more particularly, to a seat stem adjustment device used with pneumatic/hydraulic stem system and cooperated with a cable to control the height of the seat stem stably.

### 2. Descriptions of Related Art

The seat stem is connected with the seat and is movably inserted in the seat tube of a bicycle, by adjusting the seat stem relative to the seat tube, the height of the seat can be adjusted to meet different users' need.

The conventional adjustment device for the seat stem generally comprises the hydraulic adjustment device, the pneumatic/hydraulic adjustment device, and the mechanical adjustment device. The hydraulic adjustment device uses a hydraulic cylinder and hydraulic paths to control the seat stem to be moved linearly in the seat tube. The pneumatic/hydraulic adjustment device uses both of the pneumatic means and the hydraulic means to adjust the seat stem relative to the seat tube. The mechanical adjustment device uses mechanical mechanism to adjust the seat stem relative to the seat tube.

An operation device is needed to make the above-mentioned adjustment devices be activated so as to adjust the seat stem relative to the seat tube. Generally, the operation device is attached to the handlebar or the position close to the seat tube/seat stem. The operation device can be operated by a cable, a pneumatic/hydraulic device, and an electro-magnetic device. The cable is pulled or released to activate the adjustment device. The pneumatic/hydraulic device uses a pneumatic/hydraulic cylinder cooperated with related hydraulic path and volume and speed of the hydraulic liquid to activate the adjustment device. The electro-magnetic device uses electric power to activate the adjustment device.

Taiwan Patent No. 099117818 discloses a method to adjust the stem tube, and the method comprises an operation device which is operated to send a command to adjust the stem tube. When the operation to the operation device is stopped, the height of the seat is higher than that before the operation device is operated. The method further comprises a step of issuing a command to lower the seat. When the command is issue, the height of the seat is lowered than that before the command is issued.

The operation device comprises an operation lever connected to the seat tube and the operation lever is pivoted by the pull force from the cable. The operation lever is connected with a control lever which is linearly moved to open or close the hydraulic liquid path. By pulling the cable, the operation lever is pivoted and the control lever is moved so as to adjust the seat stem. When the cable is released, the control lever moves back by a spring to close the hydraulic liquid path, so that the seat is positioned at the new position.

However, the operation lever moves along a curved path so that when the control lever is driven by the operation lever, the control member is not moved linearly. The control member may hit the parts besides it. The spring connected to the underside of the control member can make the control member to swing severely. The control lever hits the parts beside it may require frequent maintenance or replacement of the parts. The control lever may even be stocked.

Taiwan Patent No. 101208837 discloses a seat tube in which the seat stem is inserted. The seat tube has multiple longitudinal notches. A stop connected to the seat tube and is linearly movable relative to the seat tube. The stop has a positioning portion which is engaged with one of the notches of the seat tube. A first resilient member biases the stop member toward the direction away from the seat tube. A control member is located behind the stop member and is movable up and down relative to the seat tube. The control member has a contact portion which is normally in contact with the stop ember. The contact portion has a recess with which the stop member is engaged. A cable is connected to the control member and pulls the control member to the direction such that the recess is moved to the path that the stop member moves. A second resilient member is connected to the control member and normally pushes the control member toward the direction that the contact portion moves toward the stop member.

The seat tube has multiple notches and the stop member in a fixing base is engaged with one of the notches. The cable pulls the control member whose contact portion pushes the stop member toward one of the notches and the stop member is then engaged with the notch, so that the seat stem is positioned. When the cable is released, the second resilient member provides a force to allow the control member to move back and the contact portion is separated from the stop member. The first resilient member provides a force to allow the stop member to be separated from the notch, so that the seat stem is linearly adjustable.

Because the device is connected to the outside of the seat tube so that the fixing base has to be exposed from the seat tube and may be hit by the rider or be hit by foreign object and damaged. If the device is required to be installed in the seat tube, the seat tube has to be made to have special shape and size, and this will increase the manufacturing cost.

The present invention intends to provide a seat stem adjustment device which eliminates the shortcomings mentioned above.

Taiwan patent No. TW M468467 discloses a set stem adjustment device as defined in the preamble of claim 1.

### SUMMARY OF THE INVENTION

The present invention relates to a seat stem adjustment device, as defined in claim 1, and comprises a seat stem received in an outer tube, a control unit connected to a bicycle frame, and a leverage unit located between the outer tube and the control unit. The control unit is connected to the bicycle frame and has a cable which is connected to and driven by a lever. The leverage unit has a top member connected to the lower end of the outer tube. A first link is pviotably connected to the top member and contacts the valve rod. A second link is pivotably connected to the top member and has a mediate portion pivotably connected to the top member. The second link is connected to the cable. A resilient member is connected between the top member and the second link. The second link pushes the first link to open or close the hydraulic liquid path when the cable is operated so as to adjust the height of the seat. The first and second links indirectly pushes the valve rod which moves linearly and does not shake. The control by the operation of the cable is more stable and reliable. The resilient member and the valve rod are not directly connected to each other so as to prevent the valve rod from shaking and swinging, such that the valve rod is not stocked.

The primary object of the present invention is to provide a seat stem adjustment device, wherein the first and second links indirectly pushes the valve rod which moves linearly and does not shake.

Another object of the present invention is to provide a seat stem adjustment device, wherein leverage unit indirectly pushes the valve rod to ensure that the valve rod moves linearly and does not shake.

Yet another object of the present invention is to provide a seat stem adjustment device, wherein the resilient member and the valve rod are not directly connected to each other so as to prevent the valve rod from shaking and swinging, such that the valve rod is not stocked.

A further object of the present invention is to provide a seat stem adjustment device, wherein adjustment device is installed in a common seen bicycle seat tube and is not exposed from the seat tube, so that the seat tube does not need to be a custom-made seat tube.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 shows that the seat stem adjustment device of the present invention is installed to a bicycle;
Fig. 2 is a perspective view to show the seat stem adjustment device of the present invention;
Fig. 3 is an exploded view of a seat stem adjustment device;
Fig. 4 is a cross sectional view of a seat stem adjustment device;
Fig. 5 is an enlarged cross sectional view of the circled portion in Fig. 4;

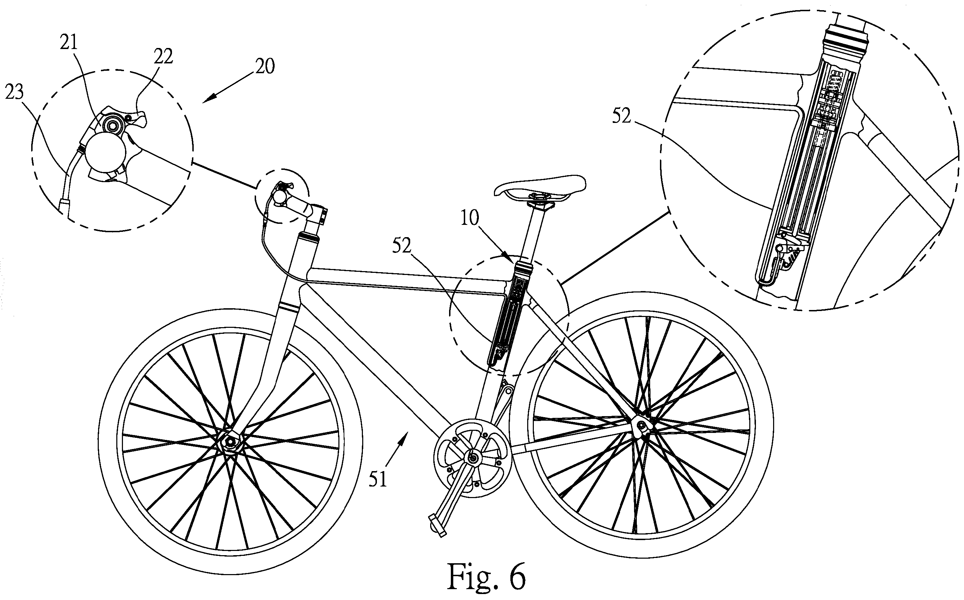

Fig. 6 shows two enlarged cross sectional views of seat stem adjustment device of the present invention used to a bicycle;
Fig. 7 is a cross sectional view of a seat stem adjustment device, wherein the seat stem is lifted;
Fig. 8 is an enlarged cross sectional view of the circled portion in Fig. 7;
Fig. 9 is a cross sectional view a seat stem adjustment device, wherein the seat stem is secured at a position;
Fig. 10 is an enlarged cross sectional view of the circled portion in Fig. 9;
Fig. 11 is a cross sectional view of another embodiment of the seat stem adjustment device of the present invention, and
Fig. 12 is an enlarged cross sectional view of the circled portion in Fig. 11.

### DETAILED DESCRIPTION OF THE PREFERRED EMBODIMENT

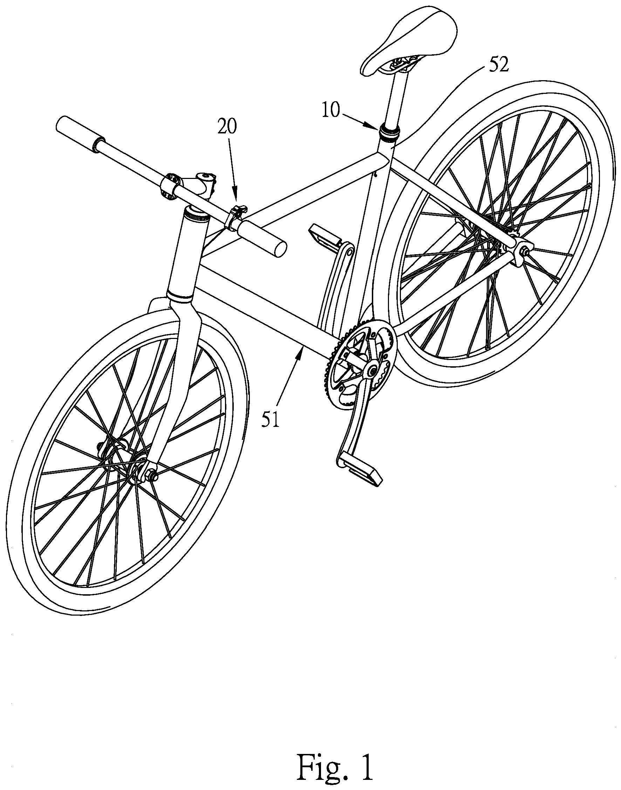

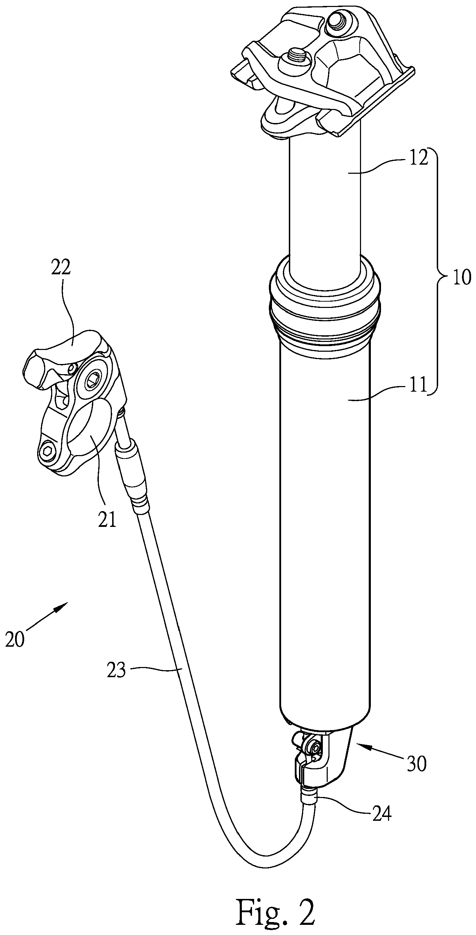

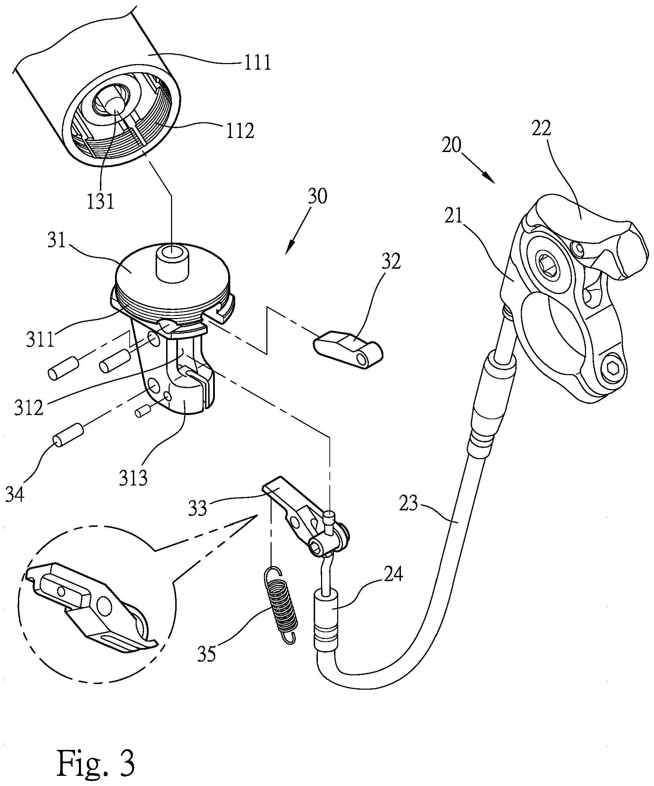

Referring to Figs. 1 to 5, the seat stem adjustment device of the present invention comprises a seat stem unit 10 which is received in the seat tube 51 of the bicycle, a control unit 20 connected to a position of the bicycle frame 52, and a leverage unit 30 located between the seat stem unit 10 and the control unit 20.

The seat stem unit 10 comprises an outer tube 11 and a seat stem 12 which is inserted into the outer tube 11 and linearly movable relative to the outer tube 11. The seat stem 12 has a valve 13 received therein which has a valve rod 131 which is movable linearly. The valve rod 131 has a first end that is able to control a hydraulic liquid path, and a second end of the valve rod 131 extends toward the lower end of the outer tube 11. According to an embodiment not forming part of the claimed invention, an extension section 111 extends from the lower end of the outer tube 11 and a first fixing portion 112 is formed at the inside of the extension section 111.

The control unit 20 is connected to the bicycle frame 52 and has a positioning unit 21 which is fixed to a position of the bicycle frame 52, and a lever 22 is pivotably connected to the positioning unit 21. A cable 23 has a fist end extending toward the lower end of the outer tube 11, and a second end of the cable 23 is connected to the lever 22. The cable 23 is pulled when the lever 22 is pivoted. An end piece 24 is mounted to the cable 23 and located at the lower end of the outer tube 11.

The leverage unit 30 has a top member 31 which is connected to the outer tube 11. The top member 31 is a round disk and, according to an embodiment not forming part of the claimed invention, has a second fixing portion 311 formed on the outside thereof. According to this embodiment not forming part of the claimed invention, the second fixing portion 311 is threadedly connected to the first fixing portion 112. The top member has a room 312 defined therein. A first link 32 is pivotably connected to the top member 31 in the room 312. A mediate portion of the first link 32 is in contact with the valve rod 131. A second link 33 has a mediate portion pivotably connected to the top member 31 in the room 312. The top member 31 has a connection portion 313 to which the end piece 24 is connected. The cable 23 extends through the end piece 24 and the connection portion 313 and is connected to the second link 33. The second link 33 has a first end connected to the cable 23 and is pivoted by the cable 23 so as to contact the first link 32 which then pushes the valve rod 131 upward to open the hydraulic liquid path when the second link 33 is pivoted an angle. A pin 34 extends through the top member 31 and the room 312.

A resilient member 35 such as a spring, has a first end fixed to the pin 34 and a second end of the resilient member 35 is connected to an end of the second link 33. The resilient member 35 provides a force to return the second link 33 when the cable 23 is released.

By driving and releasing the leverage unit 30, the first and second links 32, 33 indirectly push the valve rod 131 to move linearly so that the valve rod 131 does not swing or shake during moving to increase the sensibility of the operation. The resilient member 35 is not connected with the valve rod 131 so as to avoid the valve rod 131 from swinging such that the valve rod 131 is not stocked.

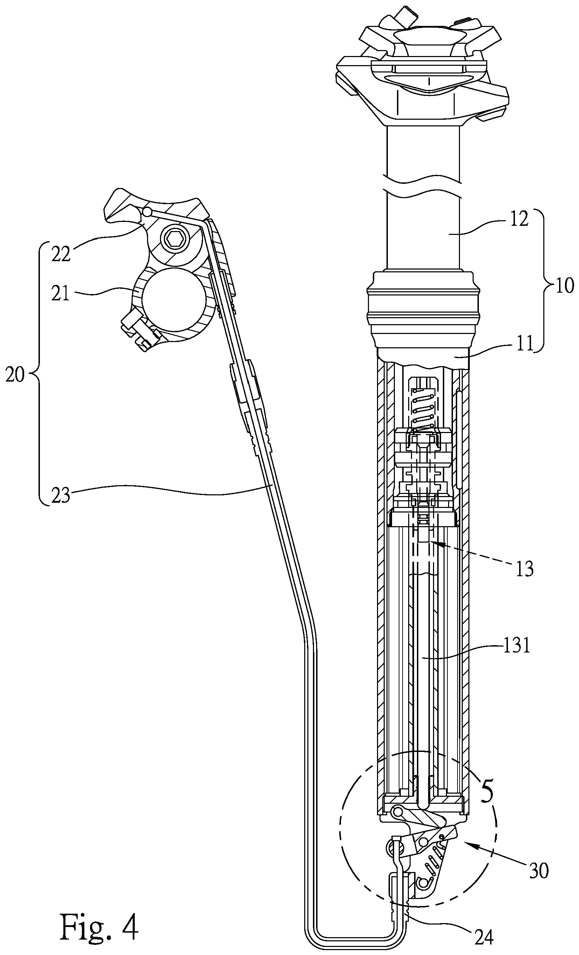

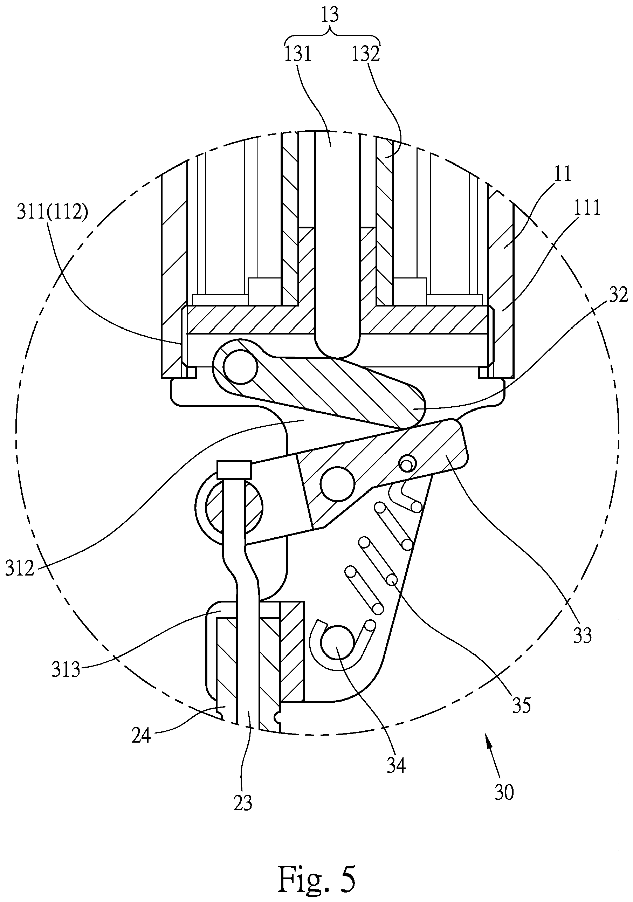

As shown in Figs. 4 and 5, the top member 31 has the room 312 defined therein and the connection portion 313 is integral to the top member 31. The distal end of the valve rod 131 exposed from the outer tube 11. The first link 32 is pivotally connected to an upper position of the room 312 of the top member 31, and the mediate portion of the second link 33 is pivotably connected to the mediate portion of the room 312 of the top member 31. The pin 34 extends through the sidewall of the room 312. The resilient member 35 is connected between the pin 34 and the second link 33. The end piece 24 is fixed to the connection portion 313, and the cable 23 extends through the end piece 24 and the connection portion 313 and is fixed to the second link 33. The other end of the cable 23 is connected to the lever 22. The lever 22 is connected to the positioning unit 21 which is fixed to a position of the bicycle frame 52, such as the handlebar. The second fixing portion 311 of the top member 31 is threadedly connected to the first fixing portion 112 of the extension section 111 of the outer tube 11. The valve rod 131 extends through the top member 31 and reaches the interior of the room 312, and contacts the first link 32.

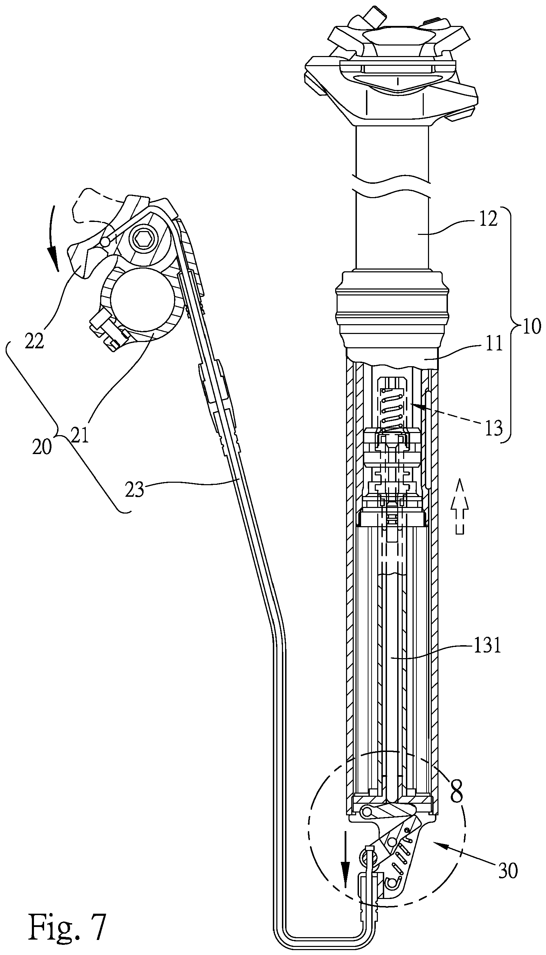

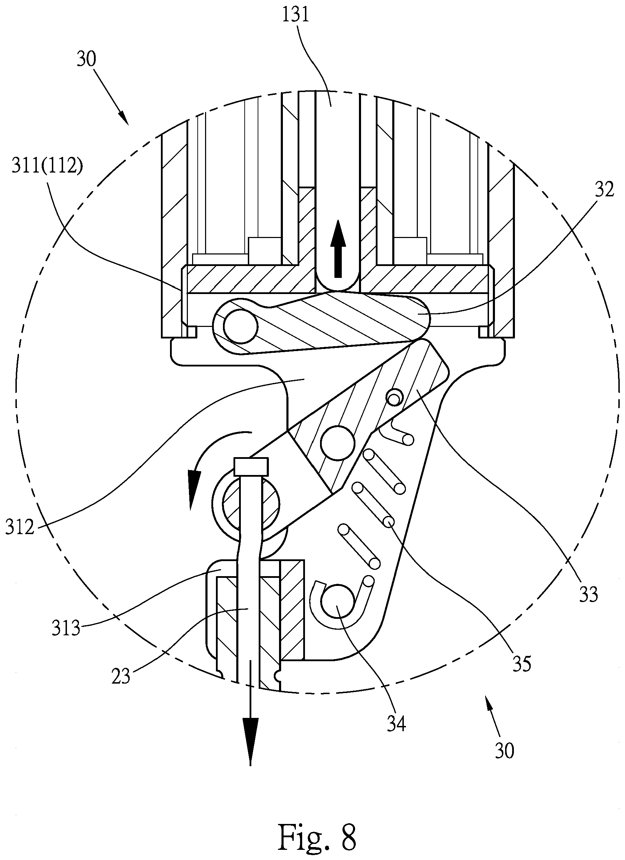

When adjusting the height of the seat, as shown in Figs. 7 and 8, by pivoting the lever 22 to pull the cable 23, the cable 23 pivots the second link 33 which contacts the first link 32, and the resilient member 35 is stretched. The force is continuously applied to the first and second links 32, 33 which are further pivoted and the first link 32 pushes the valve rod 131 to move linearly toward the seat stem 12 to open the hydraulic liquid path, and the hydraulic liquid moves the seat stem 12 linearly relative to the outer tube 11 to raise the seat.

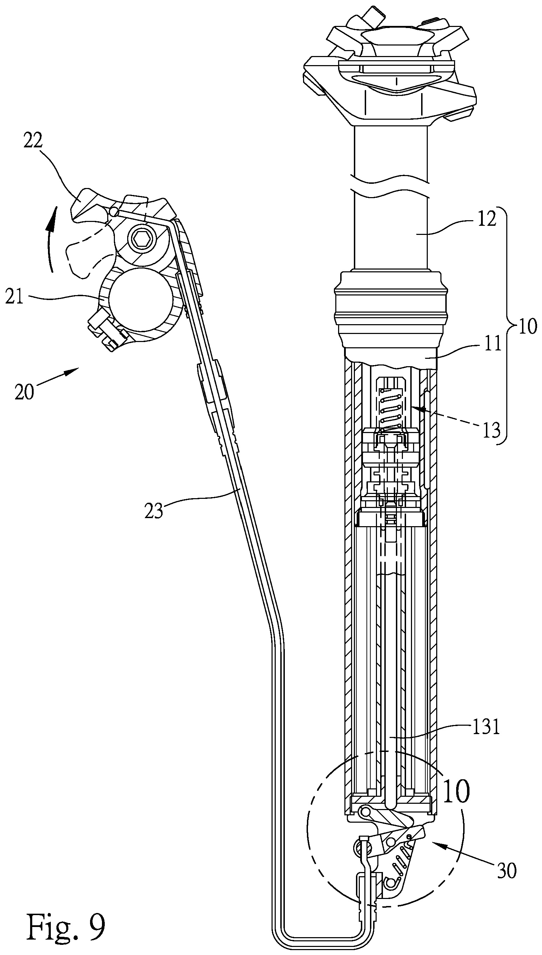

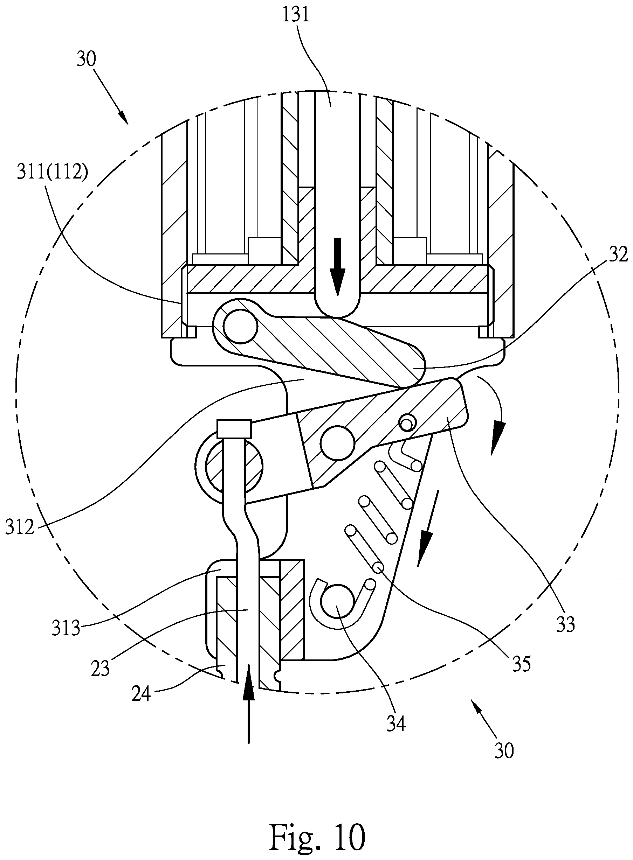

When the seat is moved to a desired position, as shown in Figs. 9 and 10, the lever 22 is released and the resilient member 35 provides a force to let the second link 33 move back. On the other hand, the valve rod 131 is pushed toward the room 312 due to the change of the hydraulic liquid pressure and the operation of the valve 13, the first link 32 is moved to seal the hydraulic liquid path. Once the hydraulic liquid path is closed, the seat stem 12 cannot move relative to the outer tube 11 so that the seat is secured at that position.

The leverage unit 30 connected to the extension section 111 on the outer tube 11 comprises the first and second links 32, 33 which indirectly push the valve rod 131. The second link 33 moves back to its initial position by the resilient member 35 when the lever 22 is released. The first and second links 32, 33 are moved by leverage principle to indirectly push the valve rod 131 to move linearly. When the second link 33 directly pushes the first link 32, the first link 32 indirectly pushes the valve rod 131 to move linearly. Because the valve rod 131 is indirectly pushed by the first link 32 so that the valve rod 131 has higher degree of freedom when it moves and does not swing or shake when moving linearly. This feature prevents the valve rod 131 from hitting other parts during movement and can prolong the life of use of the adjustment device. The valve rod 131 is not stocked as described in the conventional seat adjustment devices.

The leverage unit 30 is located at the lower end of the outer tube 11 and received in the bicycle seat tube 51, when the resilient member 35 and/or the leverage unit 30 needs to be maintained, the rider only needs to remove the seat stem from the bicycle seat tube 51 and removes the top member 31 from the outer tube 11 to access the leverage unit 30, the maintenance is easy and convenient.

The leverage unit 30 and the outer tube 11 are received in the bicycle seat tube 51, only the cable 23 extends through the bicycle seat tube 51 and is connected to the positioning unit 21 on the handlebar, this arrangement prevents the related parts from being damaged by being hit with foreign objects if they are exposed from the bicycle seat tube 51. Therefore, the present invention also has higher safety level. Furthermore, the present invention can be used in the existed bicycle seat tubes 51, no custom-made seat tubes are needed, so as to reduce the cost for using and manufacturing the present invention.

The valve rod 131 and the resilient member 35 are not directly connected to each other, the resilient member 35 provides the force to return the second link 33 to its initial position when the cable 23 is released. The specific arrangement ensures that the resilient member 35 applies an even force to the valve rod 131 which is not stocked.

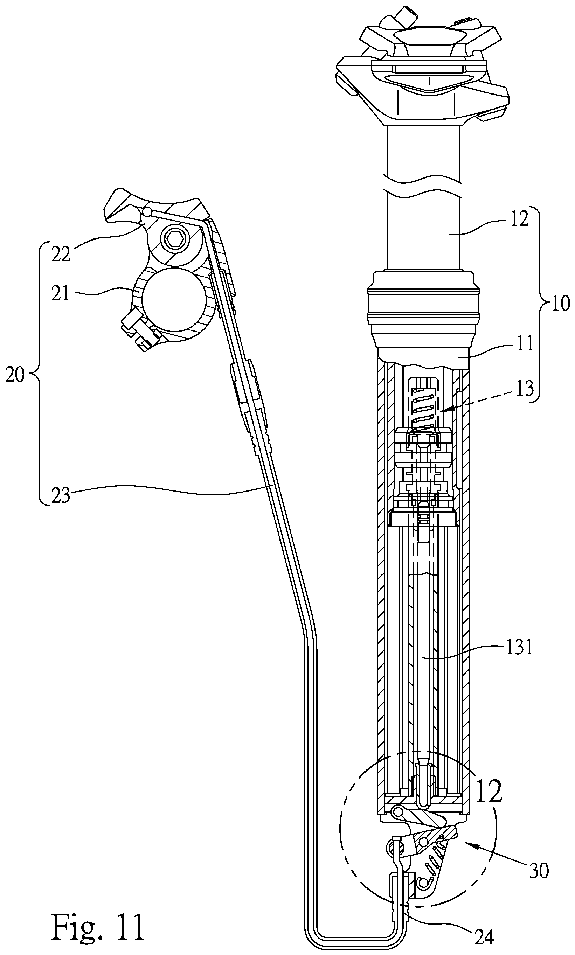

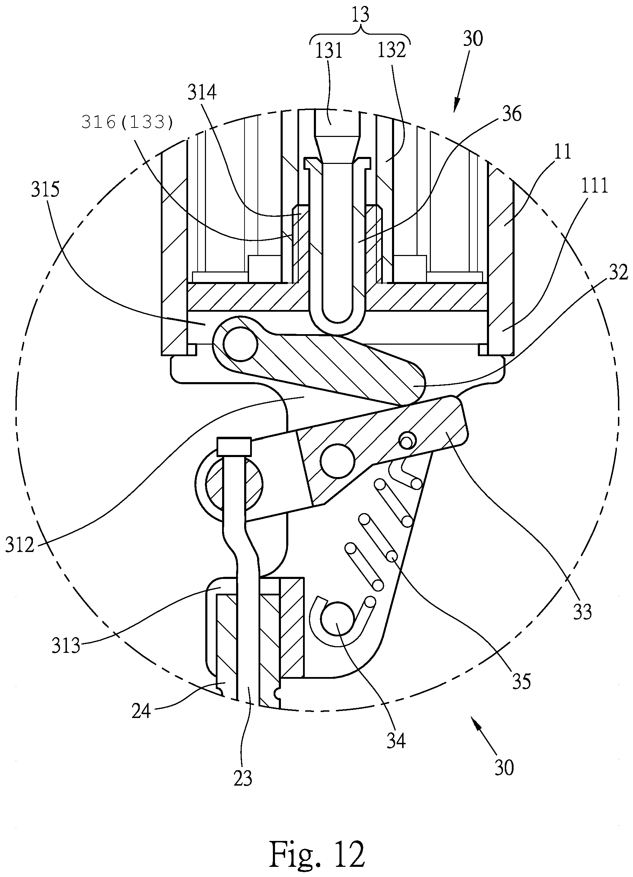

As shown in Figs. 11 to 12, showing an embodiment of the present invention, wherein a cap 36 is mounted to the valve rod 131 and the cap 36 contacts the first link 32. The cap 36 is made by stiff material. The valve rod 131 is located in an adjustment tube 132, wherein the adjustment tube 132 has a first end extending toward the extension section 111 of the lower end of the outer tube 11. A first fixing portion 133 is formed in the inside of the adjustment tube 132. The top member 31 has a stepped disk on a top thereof, wherein the stepped disk has a first stepped portion 314 and a second stepped portion 315. The first stepped portion 314 extends from the center of the second stepped portion 315. The outer diameter of the first stepped portion 314 is smaller than that of the second stepped portion 315. A second fixing portion 316 is formed on an outside of the first stepped portion 314. The first fixing portion 133 is threadedly connected to the second fixing portion 316.

For this embodiment, the valve 13 has the adjustment tube 132 which has the first fixing portion 133, and the first stepped portion 314 of the top member 31 has the second fixing portion 316. The first and second links 32, 33 and the resilient member 35 are installed in the room 312 of the top member 31, and the first fixing portion 133 is threadedly connected to the second fixing portion 316. The valve rod 131 extends through the first and second stepped portions 314, 315 and located in the room 312 so as to contact the first link 32.

It is noted that the cap 36 is mounted to the end of the valve rod 131 and contacts the first link 32, and because the cap 36 is made of stiff material so as to protect the valve rod 131. The first link 32 is also made of stiff material such that the wearing between the cap 36 and the first link 32 is minimized. When the cap 36 and the first link 32 are to be replaced, only the top member 31 is needed to be detached, the whole set of the seat stem assembly does not need to be dis-assembled. The maintenance is easy, and the time and cost required are minimized.

The present invention uses the first and second links 32, 33 to indirectly push the valve rod 131 by the leverage principle such that the valve rod 131 does not shake and swing during moving. The operation is smooth and efficient. The present invention can be used in the existed seat tubes and has high compatibility with the conventional seat tubes.

## Claims

1. A seat stem adjustment device comprising:
a seat stem unit (10) having an outer tube (11) and a seat stem (12) which is inserted into the outer tube (11) and linearly movable relative to the outer tube (11), the seat stem (12) having a valve (13) which has a valve rod (131), the valve rod (131) having a first end adapted to control a hydraulic liquid path, a second end of the valve rod (131) extending toward a lower end of the outer tube (11);
a control unit (20) connected to a bicycle frame (52) and having a positioning unit (21) which is fixed to the bicycle frame (52), a lever (22) pivotably connected to the positioning unit (21), a cable (23) having a first end extending toward the lower end of the outer tube (11), a second end of the cable (23) connected to the lever (22), the cable (23) being pulled when the lever (22) is pivoted, and
a leverage unit (30) having a top member (31) which is connected to the outer tube (11), a first link (32) pivotably connected to the top member (31), the first link (32) contacting the valve rod (131), a second link (33) having a mediate portion pivotably connected to the top member (31), the second link (33) having a first end connected to the cable (23) and being pivoted by the cable (23), the second link (33) contacting the first link (32) which pushes the valve rod (131) upward to be adapted to open the hydraulic liquid path when the second link (33) is pivoted an angle,
**characterized by** a resilient member (35) having a first end fixed to the top member (31) and a second end of the resilient member (35) connected to an end of the second link (33), the resilient member (35) providing a force to return the second link (33) when the cable (23) is released, wherein the valve rod (131) is located in an adjustment tube (132), the adjustment tube (132) has a first end extending toward the lower end of the outer tube (11), a first fixing portion (133) is formed in an inside of the adjustment tube (132), the top member (31) has a stepped disk on a top thereof, the stepped disk has a first stepped portion (314) and a second stepped portion (315), the first stepped portion (314) extends from a center of the second stepped portion (315), an outer diameter of the first stepped portion (314) is smaller than that of the second stepped portion (315), a second fixing portion (316) is formed on an outside of the first stepped portion (314), the first fixing portion (133) is threadedly connected to the second fixing portion (316).

2. The seat stem adjustment device as claimed in claim 1, wherein a cap (36) made of a stiff material is mounted to the valve rod (131) and the cap (36) contacts the first link (32).

3. The seat stem adjustment device as claimed in claim 1, wherein the first link (32) has a first end pivotably connected to the top member (31), a mediate portion of the first link (32) contacts the valve rod (131).

4. The seat stem adjustment device as claimed in claim 1, wherein the top member (31) has a connection portion (313) which is connected to the outer tube (11), the control unit (20) has an end piece (24) which is fixed to the connection portion (313), the cable (23) extends through the end piece (24) and the connection portion (313) and is connected to the second link (33).

5. The seat stem adjustment device as claimed in claim 1, wherein the top member (31) has a room (312) in which the first (32) and second (33) links and the resilient member (35) are received.

6. The seat stem adjustment device as claimed in claim 5, wherein a pin (34) extends through the top member (31) and the room (312), the first end of the resilient member (35) is fixed to the pin (34) of top member (31) and the second end of the resilient member (35) is connected to the second link (33).

7. The seat stem adjustment device as claimed in claim 5 wherein the valve rod (131) extends through the top member (31) and is inserted into the room (312) and contacts the first link (32).

## Patentansprüche

1. Vorrichtung zum Verstellen einer Sattelstange, umfassend:
eine Sattelstangeneinheit (10) mit einem Außenrohr (11) und einer Sattelstange (12), die ins Außenrohr (11) eingesteckt und relativ zum Außenrohr (11) linear beweglich ist, wobei die Sattelstange (12) ein Ventil (13) mit einer Ventilstange (131) aufweist, wobei die Ventilstange (131) ein erstes Ende, das zur Steuerung eines Hydraulikflüssigkeitswegs geeignet ist, wobei sich ein zweites Ende der Ventilstange (131) hin zu einem unteren Ende des Außenrohrs (11) erstreckt;
eine Steuerung (20), die mit einem Fahrradrahmen (52) verbunden ist und umfasst: eine Positioniereinheit (21), die am Fahrzeugrahmen (52) befestigt ist, einen mit der Positioniereinheit (21) schwenkbar verbundenen Hebel (22), ein Kabel (23), dessen erstes Ende sich hin zum unteren Ende des Außenrohrs (11) erstreckt, wobei ein zweites Ende des Kabels (23) mit dem Hebel (22) verbunden ist, wobei das Kabel (23) bei Schwenkungen des Hebels (22) gezogen wird, und
eine Hebeleinheit (30) mit einem oberen Element (31), das mit dem Außenrohr (11) verbunden ist, einem mit dem oberen Element (31) schwenkbar verbundenen ersten Verbindungselement (32), wobei das erste Verbindungselement (32) die Ventilstange (131) kontaktiert, einem zweiten Verbindungselement (33) mit einem Zwischenabschnitt, der mit dem oberen Element (31) schwenkbar verbunden ist, wobei das zweite Verbindungselement (33) ein erstes Ende aufweist, das mit dem Kabel (23) verbunden ist und vom Kabel (23) geschwenkt wird, wobei das zweite Verbindungselement (33) das erste Verbindungselement (32) kontaktiert, das die Ventilstange (131) aufwärts drückt, um diese zum Öffnen des Hydraulikflüssigkeitswegs anzupassen, wenn das zweite Verbindungselement (33) in einem Winkel geschwenkt wird,
**gekennzeichnet durch** ein elastisches Element (35) mit einem ersten Ende, das auf dem oberen Element (31) befestigt ist, wobei ein zweites Ende des elastischen Elements (35) mit einem Ende des zweiten Verbindungselements (33) verbunden ist, wobei das elastische Element (35) bei Lösen des Kabels (23) eine Kraft bereitstellt, um das zweite Verbindungselement (33) zurückzustellen, wobei die Ventilstange (131) in einem Stellrohr (132) angeordnet ist, wobei das Stellrohr (132) ein erstes Ende aufweist, das sich hin zum unteren Ende des Außenrohrs (11) erstreckt, ein erster Befestigungsabschnitt (133) in einer Innenseite des Stellrohrs (132) ausgebildet ist, das obere Element (31) auf einer Oberseite davon eine gestufte Scheibe aufweist, die gestufte Scheibe einen ersten gestuften Abschnitt (314) und einen zweiten gestuften Abschnitt (315) aufweist, der erste gestufte Abschnitt (314) sich von einem Mittelpunkt des zweiten gestuften Abschnitts (315) her erstreckt, ein Außendurchmesser des ersten gestuften Abschnitts (314) kleiner ist als der des zweiten gestuften Abschnitts (315), ein zweiter Befestigungsabschnitt (316) auf einer Außenseite des ersten gestuften Abschnitts (314) ausgebildet ist, der erste Befestigungsabschnitt (133) durch ein Gewinde mit dem zweiten Befestigungsabschnitt (316) verbunden ist.

2. Vorrichtung nach Anspruch 1, wobei eine Kappe (36) aus einem steifen Material auf der Ventilstange (131) montiert ist und die Kappe (36) das erste Verbindungselement (32) kontaktiert.

3. Vorrichtung nach Anspruch 1, wobei das erste Verbindungselement (32) ein schwenkbar mit dem oberen element (31) verbundenes erstes Ende aufweist, wobei ein Zwischenabschnitt des ersten Verbindungselements (32) die Ventilstange (131) kontaktiert.

4. Vorrichtung nach Anspruch 1, wobei das obere Element (31) einen Verbindungsabschnitt (313) aufweist, der mit dem Außenrohr (11) verbunden ist, wobei die Steuerung (20) ein am Verbindungsabschnitt (313) befestigtes Endstück (24) aufweist, wobei sich das Kabel (23) durch das Endstück (24) und den Verbindungsabschnitt (313) hindurch erstreckt und mit dem zweiten Verbindungselement (33) verbunden ist.

5. Vorrichtung nach Anspruch 1, wobei das obere Element (31) einen Raum (312) aufweist, in den das erste (32) und zweite Verbindungselement (33) sowie das elastische Element (35) aufgenommen sind.

6. Vorrichtung nach Anspruch 5, wobei sich ein Stift (34) durch das obere Element (31) und den Raum (312) erstreckt, wobei das erste Ende des elastischen Elements (35) am Stift (34) des oberen Elements (31) befestigt ist und das zweite Ende des elastischen Elements (35) mit dem zweiten Verbindungselement (33) verbunden ist.

7. Vorrichtung nach Anspruch 5, wobei sich die Ventilstange (131) durch das obere Element (31) hindurch erstreckt und in den Raum (312) eingeführt wird und das erste Verbindungselement (32) kontaktiert.

## Revendications

1. Dispositif de réglage de tige d'assise comprenant :
une unité de tige d'assise (10) ayant un tube externe (11) et une tige d'assise (12) qui est introduite dans le tube externe (11) et mobile de manière linéaire par rapport au tube externe (11), la tige d'assise (12) ayant une valve (13) qui a une tige de valve (131), la tige de valve (131) ayant une première extrémité apte à contrôler un trajet de liquide hydraulique, une seconde extrémité de la tige de valve (131) s'étendant vers une extrémité inférieure du tube externe (11) ;
une unité de commande (20) reliée à un cadre de bicyclette (52) et ayant une unité de positionnement (21) qui est fixée au cadre de bicyclette (52), un levier (22) relié de manière pivotante à l'unité de positionnement (21), un câble (23) ayant une première extrémité s'étendant vers l'extrémité inférieure du tube externe (11), une seconde extrémité du câble (23) étant reliée au levier (22), le câble (23) étant tiré lorsque le levier (22) est pivoté, et
une unité de bras de levier (30) ayant un élément supérieur (31) qui est relié au tube externe (11), une première bielle (32) reliée de manière pivotante à l'élément supérieur (31), la première bielle (32) étant en contact avec la tige de valve (131), une seconde bielle (33) ayant une partie médiane reliée de manière pivotante à l'élément supérieur (31), la seconde bielle (33) ayant une première extrémité reliée au câble (23) et étant amenée à pivoter par le câble (23), la seconde bielle (33) étant en contact avec la première bielle (32) qui pousse la tige de valve (131) vers le haut pour être apte à ouvrir le trajet de liquide hydraulique lorsque la seconde bielle (33) est amenée à pivoter d'un angle,
**caractérisé par** un élément élastique (35) ayant une première extrémité fixée à l'élément supérieur (31) et une seconde extrémité de l'élément élastique (35) reliée à une extrémité de la seconde bielle (33), l'élément élastique (35) fournissant une force pour ramener la seconde bielle (33) lorsque le câble (23) est relâché, la tige de valve (131) étant placée dans un tube de réglage (132), le tube de réglage (132) ayant une première extrémité s'étendant vers l'extrémité inférieure du tube externe (11), une première partie de fixation (133) étant formée dans un intérieur du tube de réglage (132), l'élément supérieur (31) ayant un disque étagé sur une partie supérieure de celui-ci, le disque étagé ayant une première partie étagée (314) et une seconde partie étagée (315), la première partie étagée (314) s'étendant à partir d'un centre de la seconde partie étagée (315), un diamètre externe de la première partie étagée (314) étant plus petit que celui de la seconde partie étagée (315), une seconde partie de fixation (316) étant formée sur un extérieur de la première partie étagée (314), la première partie de fixation (133) étant reliée par filetage à la seconde partie de fixation (316).

2. Dispositif de réglage de tige d'assise selon la revendication 1, dans lequel un capuchon (36) fait d'un matériau rigide est monté sur la tige de valve (131) et le capuchon (36) est en contact avec la première bielle (32).

3. Dispositif de réglage de tige d'assise selon la revendication 1, dans lequel la première bielle (32) a une première extrémité reliée de manière pivotante à l'élément supérieur (31), une partie médiane de la première bielle (32) étant en contact avec la tige de valve (131).

4. Dispositif de réglage de tige d'assise selon la revendication 1, dans lequel l'élément supérieur (31) a une partie de liaison (313) qui est reliée au tube externe (11), l'unité de commande (20) a une pièce d'extrémité (24) qui est fixée à la partie de liaison (313), le câble (23) s'étendant à travers la pièce d'extrémité (24) et la partie de liaison (313) et étant relié à la seconde bielle(33).

5. Dispositif de réglage de tige d'assise selon la revendication 1, dans lequel l'élément supérieur (31) a une chambre (312) dans laquelle les première (32) et seconde (33) bielles et l'élément élastique (35) sont reçus.

6. Dispositif de réglage de tige d'assise selon la revendication 5, dans lequel une broche (34) s'étend à travers l'élément supérieur (31) et la chambre (312), la première extrémité de l'élément élastique (35) est fixée à la broche (34) de l'élément supérieur (31) et la seconde extrémité de l'élément élastique (35) est reliée à la seconde bielle (33).

7. Dispositif de réglage de tige d'assise selon la revendication 5, dans lequel la tige de valve (131) s'étend à travers l'élément supérieur (31) et est introduite dans la chambre (312) et est en contact avec la première bielle (32).
